Europäisches Patentamt

European Patent Office

Office européen des brevets

(19)

(11) EP 0 796 786 A1

(12) DEMANDE DE BREVET EUROPEEN

(43) Date de publication:
24.09.1997 Bulletin 1997/39

(51) Int Cl.6: **B64G 1/28**, G05D 1/08

(21) Numéro de dépôt: 97400615.7

(22) Date de dépôt: 19.03.1997

(84) Etats contractants désignés:
DE ES GB IT

(30) Priorité: 22.03.1996 FR 9603634

(71) Demandeur: AEROSPATIALE Société Nationale Industrielle
75781 Paris Cédex 16 (FR)

(72) Inventeurs:
• Sghedoni, Michel
  06810 Auribeau s/Siagne (FR)
• Roser, Xavier
  06210 Mandelieu (FR)
• Rocaboy, Alain
  06300 Nice (FR)

(74) Mandataire: Rinuy, Santarelli
14, avenue de la Grande Armée,
B.P. 237
75822 Paris Cédex 17 (FR)

(54) **Procédé et dispositif pour la manoeuvre rapide d'une charge utile embarquée sur une plate-forme spatiale**

(57) Pour commander en orientation une charge utile (9) embarquée sur une plate-forme (13) d'un véhicule spatial (1):

• on détermine un signal de manoeuvre propre à faire appliquer à la charge utile (9) par un moteur électrique reliant la charge utile à la plate-forme (13), un couple de basculement propre à générer le basculement nécessaire,
• on prédit le couple de réaction devant être appliqué à la plate-forme lorsque ce signal de manoeuvre sera appliqué au moteur électrique, et on détermine un signal de compensation propre à faire appliquer à la plate-forme, par un système de gyroscopes d'inertie (3) dont elle est munie, un couple de compensation opposé à ce couple de réaction prédit, et
• on applique simultanément le signal de manoeuvre au moteur électrique et le signal de compensation au système de gyroscopes d'inertie (3).

FIG.1

Printed by Jouve, 75001 PARIS (FR)

## Description

L'invention concerne la manoeuvre d'une ou plusieurs charge(s) utile(s) orientables embarquées sur une plate-forme au sein d'un engin ou système spatial.

L'objet de l'invention est la réalisation d'un tel engin ou système spatial, dans lequel l'orientation de ces charges utiles peut être modifiée rapidement (180° dans une durée inférieure à 5 s) avec précision, même lorsque les inerties de ces charges utiles sont très importantes, voire même (très) supérieures (un ordre de grandeur ou plus) aux inerties de la plate-forme spatiale.

Un objet de l'invention est aussi de modifier rapidement l'orientation de ces charges utiles avec rapidité, avec une puissance électrique requise pour l'opération qui est de l'ordre de grandeur, au rendement près, de la puissance mécanique nécessaire à la modification de l'orientation de la ou des charges utiles.

Un objet de l'invention est aussi de modifier rapidement l'orientation de ces charges utiles sans perturber ou modifier l'attitude de la plate-forme spatiale.

Un objet de l'invention est aussi de pouvoir modifier, éventuellement rapidement, l'orientation de la plate-forme spatiale sans modifier l'orientation de la ou des charges utiles.

Un objet de l'invention est aussi de pouvoir modifier, indépendamment, éventuellement simultanément, l'orientation de la ou des charges utiles et l'orientation de la plate-forme.

Un objet de l'invention est aussi de pouvoir effectuer à la fois le contrôle d'attitude de la plate-forme spatiale et celui du système spatial. (mais l'invention ne vise pas le contrôle d'attitude en soi de la plate-forme spatiale.

La manoeuvre rapide de charges utiles d'inertie importante nécessite des couples élevés dont la variation est rapide. Ces manoeuvres, par les couples qu'elles engendrent, peuvent générer des secousses sur la plate-forme spatiale, dont on souhaite pourtant maintenir l'orientation et la stabilité. Les secousses générées par les manoeuvres sont très importantes puisqu'elles peuvent, si elles ne sont pas compensées, modifier de plusieurs degrés en moins d'une seconde l'attitude de la plate-forme spatiale.

Le premier problème est d'éviter de transmettre ces perturbations importantes à la plate-forme. Il est ainsi préférable d'isoler la plate-forme de la source de ces secousses. Le choix des actionneurs et du système est conditionné par cette contrainte.

La charge utile est reliée par un mécanisme à la plate-forme. Les actionneurs nécessaires à l'actionnement de ce mécanisme doivent en pratique pouvoir générer des couples de plusieurs dizaines de Nm :

- des actionneurs par expulsion de matière (propulseurs chimiques, plasmiques...) peuvent être envisagés. Cependant, ce sont des actionneurs, dont la source d'énergie n'est pas renouvelable de par leur principe de fonctionnement. La fréquence des manoeuvres réduit donc considérablement la durée de vie d'un tel système. Ces actionneurs n'ont qu'une faible précision, trop réduite pour assurer la précision et la stabilité de pointage ;

- les actionneurs à entraînement électrique (moteurs électriques), peuvent générer des couples importants. Leur résolution en couple est de l'ordre de 1/1000 du couple maximum qu'ils peuvent fournir; la précision de l'actionnement est donc difficile à réaliser. Ces actionneurs agissent par le principe d'action/réaction, ils génèrent donc sur leur support une réaction égale au couple qu'ils fournissent à la charge utile manoeuvrée. La plate-forme du satellite est donc soumise aux secousses et perturbations générées par ces actionneurs. Ils dégradent donc considérablement compte tenu de l'amplitude (quelques dizaines de Nm) et de la fréquence (quelques Hz à quelques dizaines de Hz) des perturbations, la stabilité et l'attitude de la plate-forme, et imposent une conception particulière de la structure pour supporter ces efforts. La réaction de ces actionneurs doit être compensée. Cette compensation peut être effectuée par un mécanisme, en utilisant des masses contrarotatives. La surcharge et la consommation d'énergie supplémentaire sont cependant importantes. Cette solution est très difficile ou tout au moins très chère à redonder. Des perturbations plus faibles, d'amplitude inférieure au Nm, peuvent être compensées par le Système de Contrôle d'Attitude (SCA), comme c'est le cas pour les manoeuvres, lentes, d'orientation des panneaux solaires, ou d'antennes. Mais le transfert à la plate-forme d'importantes perturbations et la difficulté d'assurer une bonne résolution de la commande, rend l'usage de moteurs difficiles ;

- les actionneurs par échange de moment cinétique (Gyroscopes d'Inertie, roues à réaction, roues d'inertie, roues sur cardan) sont a priori les plus adaptés à la présente application. Ils échangent leur moment cinétique avec le corps sur lequel ils sont fixés, comme décrit par exemple par le brevet US-3,452,948 : SYSTEM AND METHOD FOR FREE BODY STABILIZATION AND ORIENTATION (Système et Méthode pour la Stabilisation et l'Orientation d'un Corps Libre). Un "corps libre" peut ainsi être mis en rotation suivant un ou plusieurs axes en modifiant un moment cinétique embarqué à bord du dit corps. Les Gyroscopes constituent des actionneurs par échange de moment cinétique très performants, ils peuvent fournir des couples de plusieurs centaines de Nm et atteindre, typiquement en 1 s, leur couple maximum. La meilleure solution pour actionner les rotations d'un "corps libre" dans l'espace, consiste donc à l'actionner à l'aide de Gyroscopes d'Inertie. Ce concept apparaît fournir la meilleure solution pour actionner la manoeuvre de la charge utile. En équipant cette charge utile de Gyroscopes d'inertie, ont peut actionner les rotations de la dite charge utile. Les manoeuvres de la charge utile ne transfèrent alors pas de réactions à la plate-forme, autres que celles générées par les frottements sur les liaisons, imparfaites, du mécanisme qui lie la charge utile à la plate-forme spatiale. Ce système d'actionnement de la charge utile répond efficacement au besoin en couple, et surtout au besoin d'isoler la plate-forme spatiale de la charge utile. Pour améliorer ce système, il est nécessaire de rendre les liaisons du mécanisme, qui assure la liaison entre la charge utile et la plate-forme spatiale, "parfaites". On obtient ainsi la solution décrite notamment dans le brevet US-4,375,878 (SPACE SATELLITE WITH AGILE PAYLOAD ORIENTATION SYSTEM). Des moteurs électriques sont montés sur les axes des liaisons pour compenser les efforts résiduels liés aux frottements sur les liaisons du mécanisme, et permettent ainsi de rendre ces liaisons "parfaites". Cependant la solution telle qu'elle est proposée dans ce brevet n'est pas très performante, car elle réagit aux modifications d'attitude de la plate-forme, mesurées par un ou des senseurs absolus, et transmet donc certaines vibrations à la plate-forme ; elle peut néanmoins être améliorée. Une autre solution pour rendre les liaisons parfaites consiste à utiliser des paliers magnétiques.

Cette solution apparaît dans l'état de l'art la meilleure, pour manoeuvrer avec rapidité des charges utiles dont l'inertie est importante.

L'actionnement direct de la charge utile par des Gyroscopes d'Inertie, décrit ci-dessus, a cependant un défaut important lié au principe de fonctionnement des Gyroscopes d'Inertie. Les Gyroscopes d'Inertie sont constitués d'une roue d'inertie, dont la vitesse de rotation est maintenue constante (typiquement entre 5 000 et 12 000 tours/minutes), montée sur un cardan. Ce cardan peut être mis en rotation autour d'un axe orthogonal à l'axe de rotation de la roue d'inertie. La rotation du cardan, et par conséquent de la roue d'inertie autour de cet axe génère un couple égal au moment cinétique, de norme constante, de la roue d'inertie multiplié par la vitesse de rotation du cardan ; la direction de ce couple est orthogonale à la fois à l'axe de rotation de la roue d'Inertie et à l'axe de rotation du cardan. La rotation du cardan doit être actionnée par un moteur électrique. Ce moteur doit fournir un couple nécessaire à l'accélération de la rotation du cardan (typiquement quelques Nm) et au couplage gyroscopique entre la rotation du support du Gyroscope d'Inertie et le moment cinétique de la roue d'inertie du Gyroscope d'inertie. Ce couplage gyroscopique, fonction de la géométrie du système, est de l'ordre de grandeur du moment cinétique de la roue d'inertie du Gyroscope d'Inertie multiplié par la vitesse de rotation du support du Gyroscope d'Inertie. Pour une vitesse de rotation rapide du support le couple à fournir par le moteur qui actionne la rotation du cardan peut-être de quelques dizaines de Nm. Par exemple pour un Gyroscope d'Inertie de 300 Nms, et une vitesse de rotation du support de 1 radian/s, le couple à fournir par le moteur qui actionne la rotation du cardan est de 300 Nm. Bien que le Gyroscope à Inertie apparaisse aujourd'hui l'actionneur le plus approprié et le plus performant, il n'en existe pas actuellement avec de telles caractéristiques. La résolution de l'actionneur est de toute façon difficile à garantir.

La caractéristique la plus défavorable de ce système d'actionnement de la rotation d'une charge utile réside dans le mauvais rapport entre la puissance mécanique maximale requise par la manoeuvre de la charge utile et la puissance maximale consommée par les actionneurs de la rotation de la charge utile. Ce rapport est pour des rotations rapides (typiquement plus de 180° en 5 s) inférieure à 0.2 et diminue avec la vitesse de rotation.

Par conséquent il n'existe pas aujourd'hui de système d'actionnement de charge utile qui permette aussi souvent que nécessaire de manoeuvrer rapidement et avec précision une charge utile, avec un rapport important entre la puissance mécanique maximale requise par la manoeuvre de la charge utile, et la puissance maximale consommée par les actionneurs de la rotation de la charge utile, par exemple supérieur à 0.75.

L'invention a ainsi pour objet de proposer un procédé et un dispositif permettant de manoeuvrer en rotation et pointer rapidement (c'est-à-dire effectuer une rotation de 180° dans une durée inférieure à 5 s), selon un ou plusieurs axes avec une ou plusieurs charges utiles embarquées sur un véhicule spatial, sans perturber l'attitude et la statibilité de la plate-forme, (partie du véhicule, dont le pointage reste constant), quels que soient les couples nécessaires pour actionner les manoeuvres de la ou des charges utiles et les inerties de la plate-forme et de la ou des charges utiles, avec certaines au moins des caractéristiques suivantes :

- ces manoeuvres peuvent être effectuées très fréquemment, plus de 30 % de la durée d'une orbite,
- le rapport entre la puissance maximale $P_{max}^{meca}$, requise par la manoeuvre de la ou des charges utiles, et la puissance maximale consommée par les actionneurs de la ou des rotations de la ou des charges utiles, c'est à dire la puissance installée, $P_{max}^{act}$, doit être important, par exemple supérieur à 0,75 en tenant compte d'un rendement de 0,6 des actuateurs. Ce rapport définit le rendement du mécanisme d'actionneur de la charge utile,
- la masse des actionneurs est du même ordre de grandeur que pour les solutions actuellement existantes,
- la manoeuvre en rotation et le pointage de la charge peut être réalisé avec précision.

L'invention enseigne pour ce faire de choisir des actionneurs de type électrique qui, pour l'homme de métier ont l'inconvénient apparemment rédhibitoire d'appliquer à la plate-forme des réactions devant normalement se traduire par des secousses importantes ; mais l'invention enseigne aussi, simultanément, de faire appliquer à la plate-forme par des gyroscopes d'inertie des couples opposés aux réactions prévisibles dues à l'activation des moteurs/actionneurs électriques.

L'invention propose à cet effet un procédé de commande en orientation d'une charge utile embarquée sur une plate-forme d'un véhicule spatial, selon lequel :

- on relie la charge utile à la plate-forme par l'intermédiaire d'un dispositif de manoeuvre à entraînement électrique, ayant au moins un axe de manoeuvre,

- on munit une partie de la plate-forme d'un système de gyroscopes d'inertie adapté à générer au moins des couples d'axe parallèle à l'axe de manoeuvre du dispositif de manoeuvre à entraînement électrique,

- et chaque fois qu'un basculement de la charge utile est nécessaire autour de l'axe de manoeuvre

    • on détermine un signal de manoeuvre propre à faire appliquer à la charge utile par le dispositif de manoeuvre à entraînement électrique, un couple de basculement propre à générer ledit basculement nécessaire,

    • on prédit le couple de réaction devant être appliqué à la plate-forme lorsque ce signal de manoeuvre sera appliqué au dispositif de manoeuvre à actionnement électrique,

    • on détermine un signal de compensation propre à faire appliquer à la plate-forme, par le système de gyroscopes d'inertie, un couple de compensation opposé à ce couple de réaction prédit, et

    • on applique simultanément le couple de manoeuvre au dispositif de manoeuvre à entraînement électrique et le signal de compensation au système de gyroscopes d'inertie.

Selon des enseignements préférés, éventuellement combinés -

- le dispositif de manoeuvre à entraînement électrique a au moins deux axes de manoeuvre perpendiculaires,

- on dispose la partie de la plate-forme qui est munie du système de gyroscopes d'inertie entre le dispositif de manoeuvre d'entraînement électrique et le reste de la plate-forme,

- on dispose des moyens d'amortissement entre ladite partie munie du système de gyroscopes d'inertie et le reste de la plate-forme,

- ladite partie munie du système de gyroscopes d'inertie est rigidement liée au reste de la plate-forme,

- on munit le reste de la plate-forme d'un système de contrôle d'attitude et d'orbite muni d'un ensemble d'actionnement en contrôle d'attitude et d'orbite comprenant ce système de gyroscopes d'inertie,

- ledit reste de la plate-forme est relié à une plate-forme principale par une liaison admettant un axe de rotation,

- la plate-forme est stabilisée en autorotation autour d'un axe d'autorotation confondu avec cet axe de rotation de la liaison,

- on munit la charge utile de capteurs d'attitude générant des signaux de mesure d'attitude et on génère le signal de compensation à partir du couple de réaction et de ces signaux de mesure d'attitude.

L'invention propose également un engin spatial comportant

- une plate-forme spatiale,

- une charge utile mobile embarquée sur cette plate-forme,

- une liaison connectant la charge utile à la plate-forme, cette liaison comportant un dispositif de manoeuvre à entraînement électrique, ayant au moins un axe de manoeuvre,

- un système de gyroscopes d'inertie solidaire d'une partie de la plate-forme, ce système étant adapté à générer au moins des couples d'axe parallèle audit axe de manoeuvre,

- des moyens de commande en basculement pour basculer la charge utile par rapport à la plate-forme comportant :

    • des moyens pour déterminer le signal de manoeuvre propre à faire appliquer à la charge utile par le dispositif de manoeuvre à entraînement électrique, un couple de basculement propre à générer ledit basculement nécessaire,

    • des moyens pour prédire le couple de réaction devant être appliqué à la plate-forme lorsque ce signal de manoeuvre sera appliqué au dispositif de manoeuvre à actionnement électrique,

    • des moyens pour déterminer un signal de compensation propre à faire appliquer à la plate-forme, par le système de gyroscopes d'inertie, un couple de compensation opposé à ce couple de réaction prédit, et

    • des moyens pour appliquer simultanément le couple de manoeuvre au dispositif de manoeuvre à entraînement électrique et le signal de compensation au système de gyroscopes d'inertie.

Selon d'autres enseignements préférés :

- le dispositif de manoeuvre à entraînement électrique a au moins deux axes de manoeuvre perpendiculaires,

- la partie de la plate-forme qui est munie du système de gyroscopes d'inertie est montée entre le dispositif de manoeuvre d'entraînement électrique et le reste de la plate-forme,
- des moyens d'amortissement sont disposés entre ladite partie munie du système de gyroscopes d'inertie et le reste de la plate-forme,
- ladite partie munie du système de gyroscopes d'inertie est rigidement liée au reste de la plate-forme,
- le reste de la plate-forme est muni d'un système de contrôle d'attitude et d'orbite muni d'un ensemble d'actionnement en contrôle d'attitude et d'orbite comprenant ce système de gyroscopes d'inertie,
- ledit reste de la plate-forme est relié à une plate-forme principale par une liaison admettant un axe de rotation,
- la plate-forme est stabilisée en autorotation autour d'un axe d'autorotation confondu avec cet axe de rotation de la liaison,
- la charge utile est munie de capteurs d'attitude générant des signaux de mesure d'attitude et des moyens de détermination du signal de compensation reçoivent un signal représentatif du couple de réaction et ces signaux de mesure d'attitude.

La plate-forme spatiale intègre éventuellement différentes fonctions : propulsion, générateurs d'énergie électrique (générateurs solaires), détecteurs ou senseurs, calculateurs de bord, systèmes de communications (par exemple avec le sol), régulation thermique, instrumentation, charge utile solidaire de la plate-forme. Il y a une ou plusieurs charges utiles mobiles et chaque charge utile peut comprendre des éléments mobiles les uns par rapport aux autres. Les charges utiles sont reliées à la structure par un mécanisme.

Un système de gyroscopes d'inertie, monté sur une structure porteuse, en pratique la plate-forme elle-même. Il y a un système de contrôle d'attitude global qui contrôle l'attitude de la plate-forme et/ou de charges utiles.

Le mécanisme qui lie la charge utile à la plate-forme spatiale permet la rotation de ladite charge utile selon un ou plusieurs axes. Les axes sont de préférence disposés de manière à ce que le centre d'inertie de ladite charge reste fixe, ou approximativement fixe dans le référentiel de la plate-forme spatiale, quelles que soient les orientations de ladite charge utile. Le mécanisme correspond donc alors à un ensemble de liaisons cinématiques de type de préférence pivot, mais pouvant aussi être cardan ou rotule. La rotation selon chacun desdits axes de rotation est actionnée par un ou plusieurs actionneurs à entraînement électrique (moteurs électriques).

Les actionneurs à entraînement électrique peuvent être des moteurs à courant continu, des moteurs couples, des moteurs pas-à-pas (performances moins bonnes), des moteurs synchrones ou asynchrones. La résolution des actionneurs est un facteur important pour la précision de pointage, et la stabilité de la plate-forme et des charges utiles. Ces actionneurs doivent fournir des couples élevés pour actionner les rotations rapides de la ou des charges utiles, mais aussi des couples faibles pour stabiliser et pointer la ou les charges utiles. La résolution des actionneurs doit être excellente. Cependant la plage de fonctionnement d'un moteur varie au maximum d'un facteur 1 à 1000. Il est possible d'augmenter cette résolution en utilisant deux moteurs en série dont les capacités en couple sont différentes : un premier moteur, le plus puissant, fournit le couple nécessaire pour actionner la manoeuvre, et un second moteur, le moins puissant, fournit le couple dans les phases de stabilisation et de pointage fin. On peut réaliser cette mise en série de plusieurs manières différentes, par exemple en utilisant deux moteurs montés en série ou un seul moteur doté de deux bobinages différents, de manière à faire varier cette capacité en couple. Il est aussi possible d'actionner chaque axe avec plusieurs moteurs et de n'en utiliser qu'un pour le pointage fin.

Les charges utiles peuvent avoir un, deux, trois, quatre axes de rotation ou éventuellement plus. Les liaisons sont réalisées par des roulements à billes ou des paliers magnétiques. Les roulements à billes peuvent être selon les contraintes du type à billes, à rouleaux (cylindriques ou coniques) ou les deux, ou à aiguilles. La lubrification peut être fluide (ex. : huile) ou sèche (ex. : $MoS_2$). L'avantage des paliers magnétiques est de limiter les micro-vibrations et surtout de supprimer les frottements, qui sont source de perturbations pour l'attitude de la plate-forme. Un avantage supplémentaire des paliers magnétiques est leur fiabilité et leur durée de vie importante.

Le système de contrôle d'attitude global commande, en fonction des consignes d'attitude (par exemple : ligne de visée, position angulaire, cible à poursuivre) de la plate-forme et des charges utiles, les couples à fournir par les différents actionneurs (système de gyroscopes d'inertie, actionneurs à entraînement électrique ou moteurs électriques). Ces couples sont calculés à partir de la consigne, de l'attitude absolue de la plate-forme et des attitudes absolues ou relatives des charges utiles. Les attitudes des différents éléments sont toutes exprimées dans le même repère ; on peut considérer le repère orbital local par exemple. Le système de contrôle d'attitude global anticipe les modifications d'orientation des différents éléments. Il comprend un élément principal de contrôle de l'attitude de la plate-forme spatiale, et un élément de contrôle de la charge utile pour chaque charge utile, (c'est-à-dire que la plate-forme et la/les charge(s) utile(s) ont leurs propres éléments de calcul de contrôle).

Les modifications d'attitude commandées à la plate-forme orbitale sont traduites en modification de pointage différentiel des charges utiles et fournies en entrée du système de contrôle d'attitude de chaque charge utile. Le système de contrôle d'attitude de la plate-forme fonctionne en boucle fermée sur les informations d'attitude de la plate-forme. Ces informations sont obtenues par l'utilisation de senseurs. Les algorithmes de contrôle de la plate-forme sont classiques. Pour son contrôle nominal la plate-forme est considérée comme indépendante des charges utiles. La plate-forme utilise de préférence le système de gyroscopes d'inertie comme actionneur principal ; elle peut éventuellement aussi utiliser, indépendamment du système de gyroscopes d'inertie, des actionneurs par expulsion de matière, ou d'autres actionneurs. On peut néanmoins prévoir un mode de manoeuvre d'ensemble si nécessaire.

Le système de contrôle de la ou des charges utiles fonctionne en boucle fermée sur l'attitude (de préférence absolue, mais qui peut être relative), de la charge utile. Le système de contrôle de la ou des charges utiles reçoit une consigne d'attitude calculée à partir de lois de manoeuvres particulières. Les couples commandés aux actionneurs à entraînement électrique sont calculés à partir de l'orientation des différents axes de rotation de la charge utile et de la consigne du système de contrôle de la charge utile, qui comprend la différence entre l'attitude mesurée et l'attitude réelle ajoutée au terme d'anticipation des manoeuvres éventuelles de la plate-forme décrit précédemment. Ils sont traduits en couples dans le référentiel de la plate-forme et soustraits à la commande du système de gyroscopes d'inertie ; ladite commande est calculée par le système de contrôle d'attitude de la plate-forme spatiale.

L'action des actionneurs (système de gyroscopes d'inertie et système à entraînement électriques/moteurs électriques) est synchronisée en fonction des caractéristiques desdits actionneurs. Les profils de manoeuvres sont conçus de manière à ne pas dépasser les caractéristiques desdits actionneurs.

Les senseurs d'attitude de la plate-forme, sont de préférence absolus et ils peuvent être des senseurs stellaires et/ou des GPS (c'est-à-dire Global Positionning System) et/ou des gyroscopes d'attitude et/ou des accéléromètres et/ou autres ; ils peuvent éventuellement, selon l'architecture de la plate-forme, être positionnés sur la structure portant le système de gyroscopes d'inertie. Les senseurs d'attitude des charges utiles peuvent être absolus comme pour la plate-forme spatiale ou relatifs (ils mesurent alors la position des différents axes de rotation) ; ils peuvent être notamment des codeurs associés à une base de temps et/ou des codeurs optiques et/ou des résolveurs et/ou des génératrices tachymétriques, et/ou des accéléromètres et/ou des gyroscopes d'inertie. Pour un mécanisme complexe d'orientation de la charge utile (à éventuellement 2-axes, 3-axes, 4-axes ou plus), des senseurs relatifs peuvent être indispensables pour connaître l'orientation de chaque axe par rapport à la plate-forme. Cette information est nécessaire au système de contrôle de la ou des charges utiles.

Le système de gyroscopes d'inertie utilise des algorithmes classiques de contrôle décrits dans la littérature.

Pour améliorer la stabilité du système de la charge utile, il est possible d'envisager une suspension de l'ensemble de gyroscopes d'inertie. Cette suspension peut, par exemple, être réalisée par des plots élastomères. Cette suspension n'est pas toujours souhaitable, par exemple dans le cas où la charge utile est un élément d'un système optique partiellement porté par la plate-forme spatiale.

L'inconvénient des mécanismes réside souvent dans la difficulté d'assurer leur redondance et donc leur fiabilité. Les paliers qui réalisent les liaisons pivots constituent souvent un point de panne unique, dont on peut augmenter la fiabilité en utilisant des paliers magnétiques. L'utilisation de gyroscopes d'inertie permet, en cas de blocage du mécanisme, de manoeuvrer ensemble la charge utile dont le mécanisme est en panne, et la plate-forme spatiale, avec des vitesses de manoeuvre, d'un ordre de grandeur au moins plus faible que celles de la charge utile lorsque le système est nominal. Pour que cette redondance dégradée soit possible, il est cependant nécessaire que les gyroscopes d'inertie soient dimensionnés pour réaliser des vitesses de rotation élevées de leur support. Le système de contrôle d'attitude et les consignes d'attitude sont alors reprogrammés pour correspondre à ce nouveau système.

Dans le cas d'une panne du mécanisme où on envisage le changement de pointage de la charge utile par rotation d'ensemble de la plate-forme spatiale et de ladite charge utile (si cette charge utile est très manoeuvrante : plus de 10 °/s), la vitesse de rotation de l'ensemble sera plus faible (les gyroscopes d'inertie sont alors sur un support mobile qui limite leurs performances) d'un ordre de grandeur au moins. De plus, la structure de la plate-forme n'est typiquement pas conçue pour supporter des accélérations trop brutales. Donc les gyroscopes d'inertie fourniront un couple plus faible d'environ le même ordre de grandeur mais sur une durée du même ordre de grandeur plus longue. Aussi les couples transmis à la plate-forme spatiale sont d'un ordre de grandeur inférieur à ceux fournis par le SGI lorsque le système est nominal. La structure de la plate-forme spatiale est ainsi dimensionnée pour supporter ces couples et assurer la qualité de fonctionnement des instruments et de la charge utile si nécessaire. Cette structure peut donc être moins rigide et plus légère que celle supportant l'ensemble de gyroscopes d'inertie, elle peut donc amortir d'éventuels efforts résiduels transmis lors des actionnements et de la stabilisation de la ou des charges utiles.

Si le cas de panne n'est pas prévu, et si la plate-forme spatiale n'est pas prévue pour être mobile rapidement, elle peut être dimensionnée sans tenir compte des contraintes liées au principe de l'invention.

Des objets, caractéristiques et avantages de l'invention ressortent de la description qui suit, donnée à titre d'exemple non limitatif, en regard des dessins annexés sur lesquels :

- la figure 1 représente le schéma de principe de la boucle de commande du système complet comprenant la plate-forme spatiale et la charge utile. Le schéma peut être étendu à plusieurs charges utiles,
- la figure 2 est le schéma de principe d'un mécanisme 1-axe, configuration axiale,
- la figure 3 est le schéma de principe d'un mécanisme 1-axe, configuration transversale,
- la figure 4 est le schéma de principe d'un mécanisme 2-axes,
- la figure 5 est le schéma de principe d'un mécanisme 3-axes,
- la figure 6 est le schéma de principe du télescope mobile d'observation des étoiles,
- la figure 7 est le schéma de principe d'un gyroscope d'inertie 1-axe,
- la figure 8 est le schéma de principe du système où les gyroscopes d'inertie sont montés sur une plate-forme intermédiaire,
- la figure 9 est le schéma de la boucle de commande pour un satellite stabilisé par autorotation,
- la figure 10 est le schéma de la boucle de commande pour le système sans lien avec le contrôle d'attitude ou d'orbite, et
- la figure 11 est un profil de manoeuvre de la charge utile.

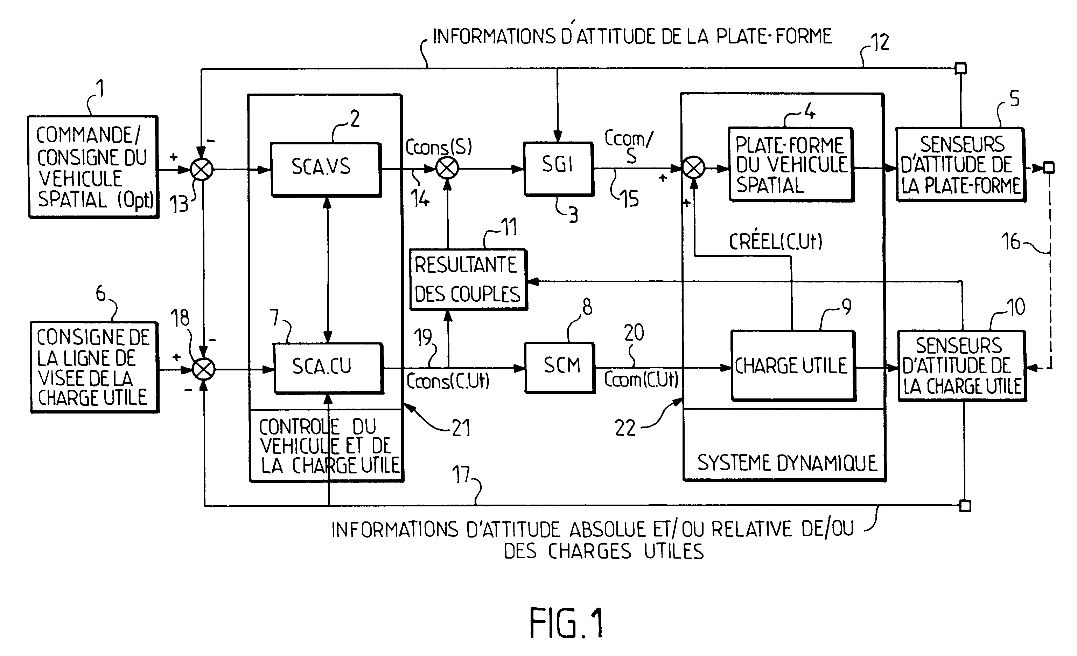

La figure 1 représente le principe de la boucle de contrôle proposée par l'invention. On peut élargir ce schéma à plusieurs charges utiles. Cette boucle reçoit la consigne d'attitude du véhicule spatial 1 qui intègre les lois de manoeuvre particulières, dont un exemple est présenté figure 11. Les informations d'attitude peuvent être exprimées de diverses manières, par exemple vitesse de rotation et/ou position angulaire, et/ou quaternion d'attitude (c'est-à-dire que la position angulaire est exprimée vectoriellement comme composition d'un axe/vecteur et d'un angle). Le contrôle du système global 21, contrôle du véhicule et de la charge utile, comprend principalement le système 2 de contrôle d'attitude de la plate-forme spatiale et le système de contrôle d'attitude de la charge utile. Les entrées du système sont l'erreur d'attitude de la plate-forme spatiale 13, et éventuellement des informations sur les attitudes des charges utiles ; ces dernières informations sont nécessaires pour gérer efficacement la réponse de la plate-forme spatiale à l'erreur d'attitude. Le système 2 de contrôle d'attitude de la plate-forme spatiale calcule, en intégrant éventuellement divers traitements, le couple de consigne 14 du système de gyroscopes d'inertie 3 (ou SGI) nécessaire au contrôle de la plate-forme spatiale 4. L'opérateur consigne de la ligne de visée de la charge utile 6, génère l'orientation de consigne de la charge utile en fonction de lois de manoeuvre déterminées. Le système 7 de contrôle de la charge utile reçoit en son entrée l'erreur d'attitude de la charge utile, à laquelle on soustrait en 18 l'erreur d'attitude prédictive de la plate-forme 13 (afin de la compenser en anticipation), et l'orientation relative des axes dans le référentiel de la plate-forme, afin de calculer les couples à effectuer 19 pour chaque actionneur 8 (Système de Contrôle des Moteurs ou SCM) et à l'opérateur "Résultante des couples" 11 qui génère, à partir des couples commandés à chaque actionneur et de la connaissance de l'attitude relative (générée par les senseurs de la charge utile 10) de chaque actionneur dans le référentiel de la plate-forme, la résultante de ces couples dans le référentiel de la plate-forme spatiale. Ces couples sont à compenser par le SGI 3 et sont donc fournis en entrée du SGI quoiqu'inversés. Le SGI 3 et le SCM 8 appliquent simultanément leurs couples, respectivement 15 et 20, au système physique 22 qui comprend la plate-forme du véhicule spatial (et le SGI) 4 et la charge utile 9. Dans le système physique la charge utile 9 transmet la réaction générée par des actionneurs à la plate-forme du véhicule spatial 4.

Les attitudes sont mesurées par des senseurs : senseurs d'attitude de la plate-forme 5 et senseurs d'attitude de la charge utile 10. Les senseurs d'attitude de la charge utile reçoivent l'attitude absolue de la plate-forme 16, afin de pouvoir générer l'attitude relative, par rapport à la plate-forme, et l'attitude absolue de ladite charge utile. Ces informations d'attitude 17 sont transmises au système de contrôle d'attitude de la charge utile 7, à la fois en boucle fermée (par 18) et directement, ainsi qu'à l'opérateur 11 qui calcule les couples à compenser par le système de gyroscopes d'inertie 3. Le système comprend donc, pour une charge utile, deux boucles de contrôle étroitement couplées. Ce schéma constitue un principe, il peut être modifié et amélioré en y ajoutant par exemple divers traitements de l'information. Les algorithmes des différents opérateurs sont classiques et nécessitent uniquement une adaptation à l'application voulue.

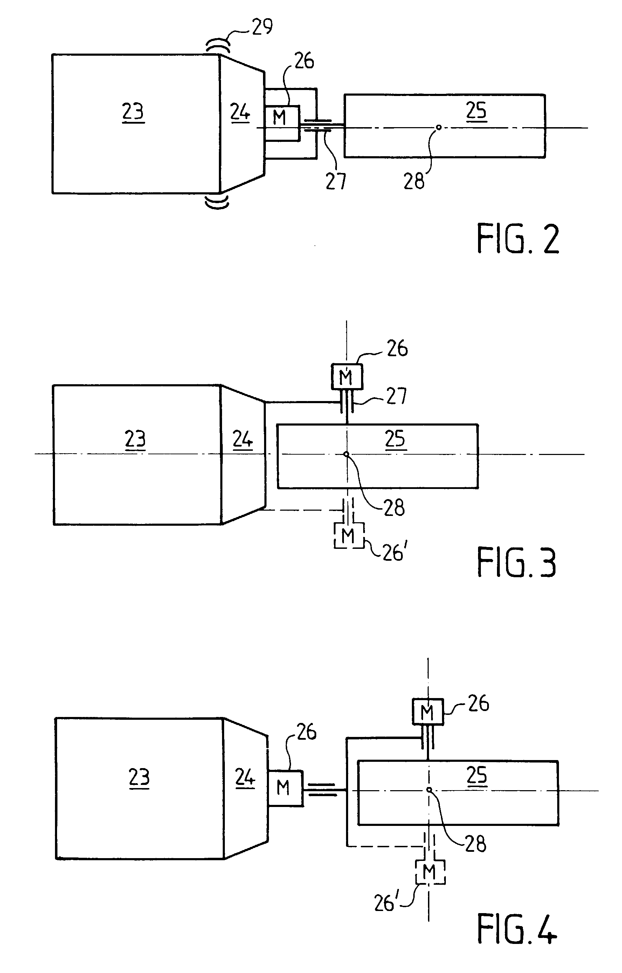

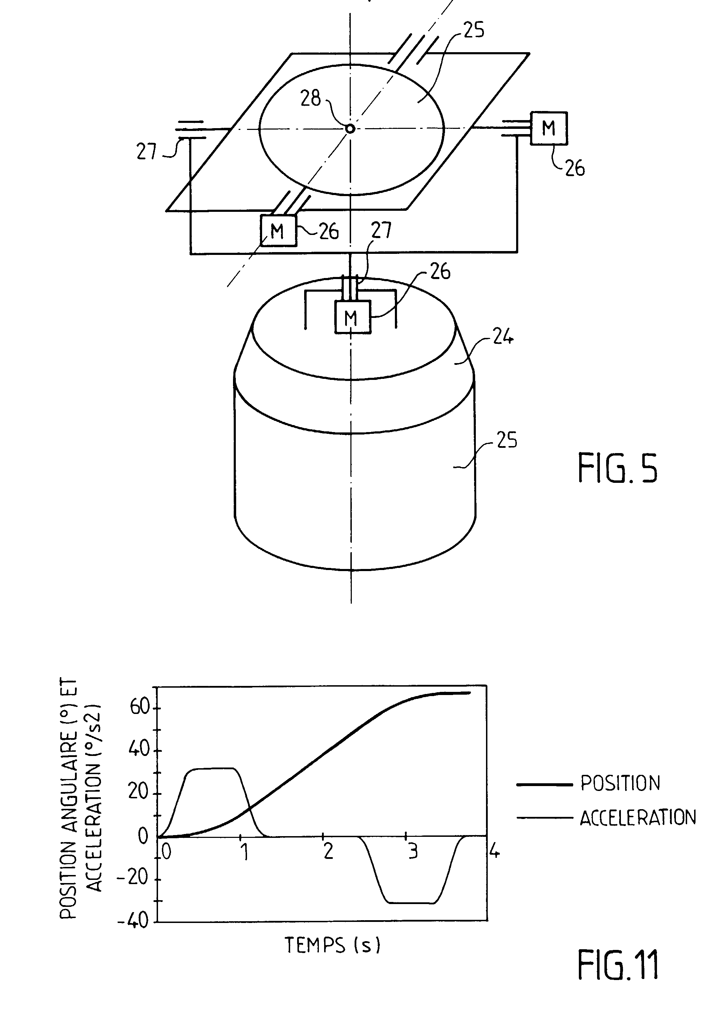

Les figures 2, 3, 4 et 5 sont des schémas de principe décrivant des manières de réaliser de liaisons entre la charge utile 25 et le Système de Gyroscopes d'Inertie SGI 24, lui même monté sur la charge utile, éventuellement par une suspension 29. Ces liaisons sont représentées en fonction du nombre de degrés de liberté (1 pour les figures 2 et 3, 2 pour la figure 4, 3 pour la figure 5), en rotation de la charge utile. Les liaisons sont des liaisons pivot 27 qui peuvent être réalisées par des roulements ou des paliers magnétiques.. L'actionnement des rotations autour desdites liaisons est réalisé par des moteurs 26. Un ou plusieurs moteurs actionnent une rotation selon un axe. Il est préférable pour la stabilité du système et ses performances de positionner le centre d'inertie 28 de la charge utile à l'intersection de ses axes de rotation. Chaque liaison peut être équipée de senseurs relatifs.

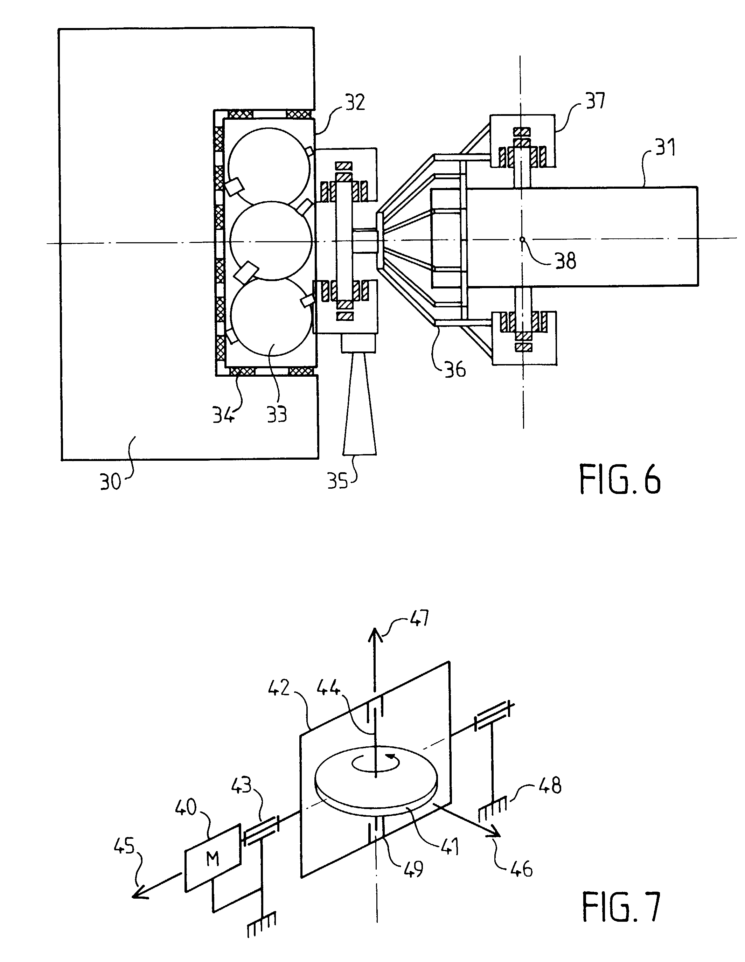

La figure 6 représente un schéma de principe d'un télescope mobile d'observation des étoiles. Sur le schéma sont représentés les éléments principaux de la réalisation du système décrit. Le satellite présenté peut utiliser le principe de contrôle de la figure 1. La charge utile (le télescope) 31 est reliée par une liaison pivot 37 réalisée par des paliers magnétiques, actionnée par des moteurs électriques et utilisant pour senseur relatif de position et de vitesse des codeurs optiques, à une armature 36, réalisée par un treillis de barres ; cette armature est reliée à la structure du système de gyroscopes d'inertie 33 par une liaison pivot 39, réalisée, de même que précédemment, par des paliers magnétiques, actionnée par des moteurs électriques, et utilisant pour senseur relatif de position et de vitesse des codeurs optiques. Cette structure supporte un senseur d'étoiles, qui sert à calculer l'attitude de la plate-forme spatiale 30. La structure du système de gyroscopes d'inertie 33 est reliée à la structure de la plate-forme spatiale 30 du satellite par des plots élastomères 34 assurant ainsi l'isolation de la plate-forme et de la charge utile.

La figure 7 représente le schéma de principe d'un Gyroscope d'Inertie, GI, de type 1-axe. Les gyroscopes d'inertie 1-axe sont les mieux adaptés à l'application décrite par la présente invention. Ils ont en effet un meilleur rapport couple/puissance et couple/masse que les gyroscopes d'inertie 2-axes. L'invention peut utiliser d'autres actionneurs à échange de moment cinétique. Les Gyroscopes d'Inertie, de principe mécanique comparable à celui des gyroscopes d'attitude réalisent un couple de commande en **basculant une roue d'inertie** 41, dont la vitesse est maintenue constante (typiquement 6 000 Rpm à 12 000 Rpm) ; cette vitesse est entretenue par un moteur. L'axe de rotation de la roue est dit axe d'autorotation ou de spin 44. Il est possible de modifier l'orientation de cet axe en le faisant tourner suivant un axe (GI 1-axe) ou deux axes (GI 2-axes). Pour cela, la roue d'inertie est montée sur un cardan 42 par une liaison pivot 49. Le cardan 42 est monté sur la structure 48 qui doit le porter, par une liaison pivot 43. La rotation du cardan sur l'axe de cette liaison est commandée par un moteur électrique 40 qui fournit un couple, dit couple d'entrée 45. La variation de direction du moment cinétique embarqué H, 47, crée un couple 46 proportionnel à sa vitesse de rotation a dont la direction, perpendiculaire au moment cinétique 47, tourne aussi.

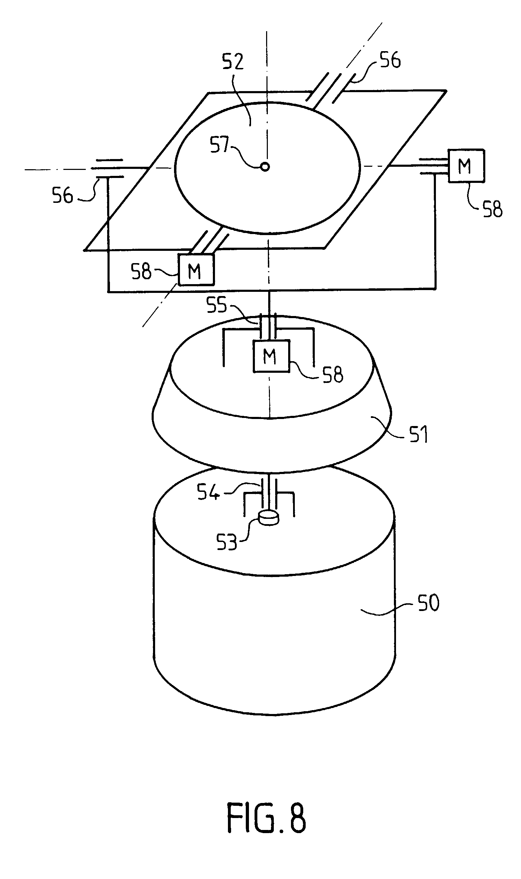

La figure 8 représente le schéma de principe de l'invention pour le cas ou les gyroscopes d'inertie sont montés sur une plate-forme intermédiaire 51 liée à la plate-forme orbitale 50 par une liaison pivot 54 La plate-forme est stabilisée en autorotation (spinné) autour d'un axe confondu avec celui-ci du pivot 54. La position relative des deux plates-formes est mesurée par un senseur 53. Un moteur peut éventuellement être monté entre la plate-forme et le Système de Gyroscopes d'Inertie au niveau de la liaison 54, afin d'activer leur rotation relative. L'utilisation d'un moteur peut être intéressante si la plate-forme spatiale n'est pas spinnée. Le mécanisme, qui lie la charge utile 52 au Système de Gyroscopes d'Inertie, ou SGI 51, est identique aux mécanismes que l'on peut monter sur une plate-forme intermédiaire SGI montée directement ou par une suspension sur la plate-forme orbitale. Le mécanisme comprend donc des éléments de structure qui supportent la charge utile ; les liaisons sont des liaisons pivot 56 ; l'actionnement des rotations selon lesdites liaisons 56 est réalisé par des moteurs 58 La première liaison 55 pivot entre le SGI et le mécanisme peut cependant être remplacée par un encastrement, et le SGI peut alors assurer ce degré de liberté.

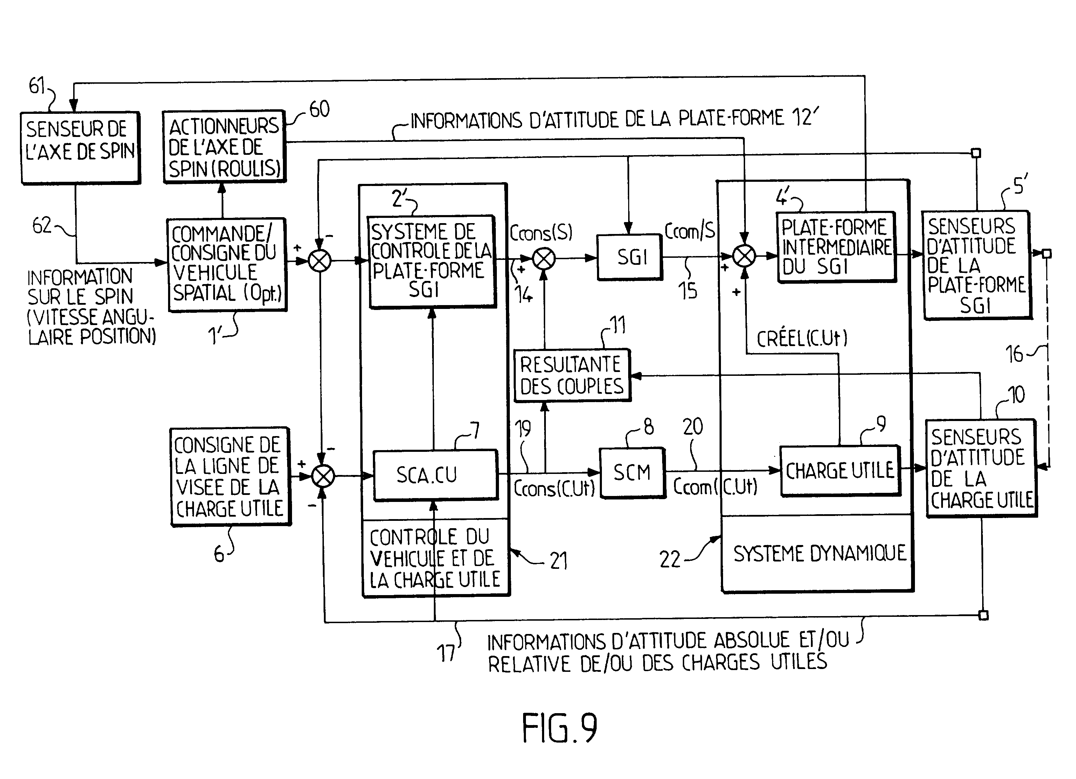

La figure 9 représente le principe de la boucle de commande pour un tel satellite spinné, avec une plate-forme intermédiaire SGI reliée par une liaison pivot à la plate-forme spatiale. Par rapport à la boucle de contrôle décrite à la figure 1 (les éléments ayant les mêmes numéros que dans la figure 1, ont dans leur principe les mêmes fonctions que les éléments de la figure 1), le système de contrôle de la plate-forme spatiale est réalisé par le Système de contrôle de la plate-forme SGI 2', qui réalise le contrôle d'attitude 2-axes, tangage et lacet (axes perpendiculaires à l'axe de spin ou axe de roulis), de la plate-forme spatiale et le contrôle 3-axes de la plate-forme SGI. La commande du véhicule spatial 1' réalise donc une boucle supplémentaire pour contrôler l'axe de roulis, ou axe de spin de la plate-forme spatiale. Cette boucle fermée de contrôle 1-axe comprend les actionneurs 60 et les senseurs de l'axe de spin 61 qui renvoient l'attitude en roulis de la plate-forme spatiale, à la commande du véhicule spatial. Le système physique 4' comprend maintenant deux éléments mobiles, la plate-forme spatiale et la plate-forme intermédiaire. Les senseurs d'attitude 5' fournissent les informations d'attitude 12' de la plate-forme intermédiaire des gyroscopes d'inertie.

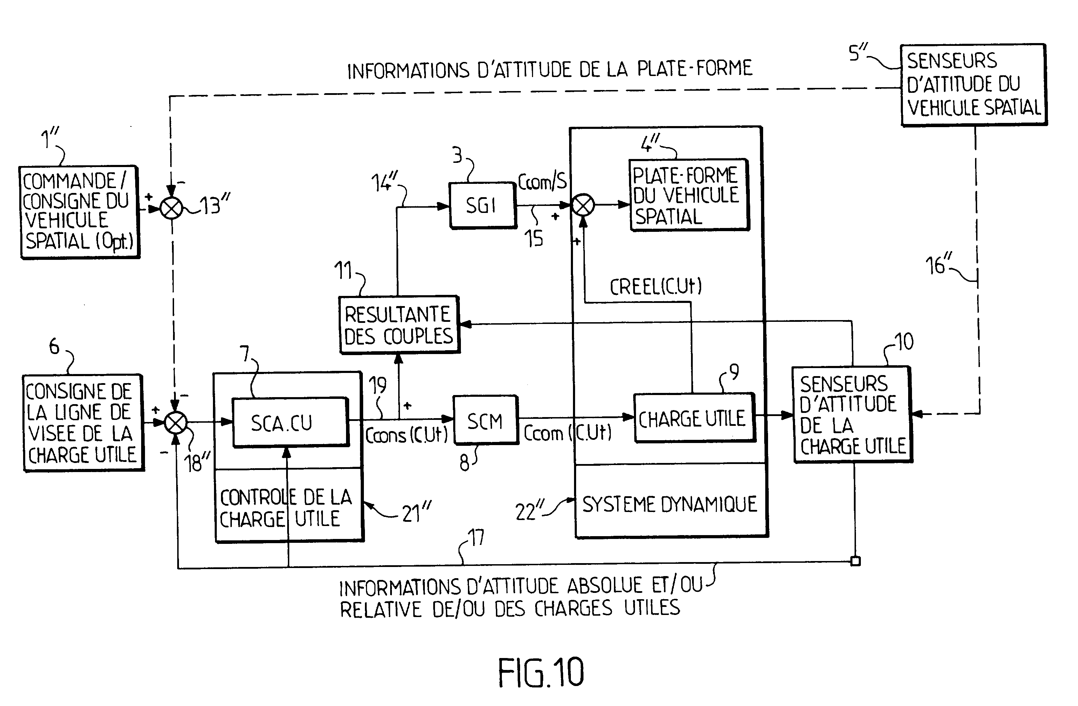

La figure 10 représente la boucle de commande pour le système sans lien avec le Contrôle d'Attitude de la plate-forme orbitale. Les éléments ayant les mêmes numéros que dans la figure 1 ont dans leur principe les mêmes fonctions que les éléments de la figure 1. La plate-forme SGI est alors commandée en boucle ouverte, uniquement par le système de contrôle d'attitude de la charge utile. On peut comme décrit à la figure 1 anticiper les manoeuvres du système spatial, par la boucle (senseurs d'attitude du système spatial, consigne du véhicule spatial). La boucle de commande supérieure est facultative ; elle est réalisée comme suit : 1" correspond à l'acquisition des informations sur la consigne, générées par le système de contrôle du système spatial. Les informations sur l'attitude du système spatial 12" sont acquises par le système de senseur 5". L'erreur d'attitude 13" est alors calculée par le comparateur 18" et transmise au système de contrôle d'attitude de la charge utile 7. Le système de gyroscopes d'inertie 3 est alors commandé en boucle ouverte, en recevant le couple de consigne 14". Le système supportant les efforts de réaction générés par les manoeuvres de la charge utile 9 est maintenant le système spatial 4", porteur de l'ensemble (gyroscopes d'inertie et charge utile).

La figure 11 représente un profil de manoeuvre suivant un axe approprié aux déplacements rapides de la charge utile. La position et les dérivées première, seconde, et troisième de la position sont des fonctions continues dérivables, qui assurent une "souplesse" de la manoeuvre. La dérivée troisième est basée sur une fonction de type : 1 + sin(k.t).

L'invention permet de modifier rapidement l'orientation de une ou plusieurs charges utiles, et surtout permet d'obtenir un bon rendement, supérieur à 0,75, entre la puissance nécessaire à la manoeuvre et la puissance effectivement fournie. Par exemple pour faire effectuer une rotation des 180° en 5 s à un corps d'une inertie de 1000 kg/m$^2$, la puissance mécanique maximale requise est de 1050 W, (avec un rendement de 0,6). La puissance maximale consommée par les gyroscopes d'inertie est, avec le système proposé par le brevet US-4.375.878 de 7000 W, soit un rapport de 0,15. La puissance requise avec le système décrit par la présente invention est de 1270 W, soit un rapport de 0,83. Le gain en termes de performances est important, facteur 5, et justifie une éventuelle augmentation de la masse du mécanisme que ce système pourrait générer.

Un exemple de réalisation de la présente invention est un télescope spatial d'observation des étoiles (voir la figure 6). Le télescope constitue la charge utile du satellite, il est monté sur un mécanisme qui lui assure deux axes de rotation qui se coupent en son centre de masse. Les axes de rotation sont réalisés avec des paliers magnétiques et actionnés par des moteurs couples. La plate-forme comprend : le système de propulsion, les générateurs solaires, les senseurs, les calculateurs de bord, les systèmes de communications (par exemple avec le sol), une régulation thermique, de l'instrumentation. L'attitude absolue est mesurée par un senseur d'étoiles. L'attitude du télescope est mesurée de manière relative par des codeurs optiques et traduite en attitude absolue grâce aux informations du senseur d'étoiles. Les caractéristiques du satellite et de sa charge utile sont les suivantes :

Satellite :

Masse 7000 kg
Inerties Ix = 7000 kg/m$^2$, Iy = 9000 kg/m$^2$, Iz = 9000 kg/m$^2$

Télescope spatial

Masse 800 kg
Inerties Ix = 225 kg/m$^2$, Iy = 675 kg/m$^2$, Iz = 675 kg/m$^2$
Longueur 3 m
Diamètre 1,50 m

Pour le pointage, dont le besoin est de 50° en 5 s, le système nécessite un couple de commande en roulis de 150 Nm et en tangage de 80 Nm. Les deux axes sont motorisés par des moteurs électriques dotés d'un double système de bobinage, comme décrit précédemment, afin d'augmenter leur résolution. Le système de gyroscopes d'inertie doit avoir une enveloppe de couple maximale d'au moins 250 Nms. On peut, pour réaliser ce système, utiliser des gyroscopes d'inertie M225 d'Honeywell, on peut en utiliser au minimum quatre, mais avec six on peut assurer une redondance chaude ou froide. Les gyroscopes d'inertie sont assemblés sur une structure en treillis dans une configuration dite "pyramidale" dans la littérature d'angle au sommet 45°.

Il est préférable en général de ne pas manoeuvrer la plate-forme, afin de garantir une meilleure stabilité d'ensemble du système spatial. Pour des applications bien particulières on peut cependant envisager de faire manoeuvrer la plate-forme éventuellement simultanément avec la ou les charges utiles, ou et pour orienter la ou les charges utiles.

Les consignes de la plate-forme spatiale, comme les consignes des charges utiles sont de préférence exprimées de manière absolue.

On appréciera que le mécanisme peut comporter un, deux, trois axes de rotation ou plus par charge utile.

Pour une charge utile mobile selon un unique axe de rotation, le système de contrôle est plus simple. Les couples à compenser sont toujours selon le même axe, l'opérateur qui calcule la résultante des couples, transfère uniquement le couple au changement de repères près.

Pour deux axes de rotation, les couples commandés aux moteurs sont toujours découplés si les axes sont orthogonaux, cependant le second axe de rotation est mobile dans le référentiel lié à la plate-forme orbitale, la direction du couple doit donc être recalculée dans le référentiel lié à la plate-forme spatiale, par l'opérateur désigné "résultante des couples". Ce calcul s'effectue via un changement de repère dont les paramètres sont la position de l'axe.

A partir de trois axes de rotation, les rotations des axes conduisent à des couplages entre les couples commandés aux actionneurs de la charge utile. Il est donc nécessaire d'exprimer, grâce à l'opérateur désigné résultante des couples, comme précédemment, ces couples dans le référentiel de la plate-forme orbitale, et d'en déduire par sommation leur résultante.

Il est possible d'utiliser plus de quatre axes de rotation pour une charge utile pour plusieurs raisons: pour une charge utile composée de plusieurs éléments mobiles les uns par rapport aux autres. Pour une charge utile orientable selon 3 axes, il peut être intéressant de réaliser un mécanisme comportant quatre axes de rotation, ou plus pour augmenter l'agilité de la charge utile. Pour de telles applications le contrôle de la charge utile devient plus complexe. On détermine alors une commande optimale des actionneurs, de manière à minimiser par exemple la consommation d'énergie. Une méthode du type pseudo-inverse de Moore-Penrose peut-être utilisée.

On appréciera également qu'une variante importante de la présente invention consiste à monter l'ensemble de gyroscopes d'inertie sur une plate-forme intermédiaire entre la plate-forme spatiale et la ou les charges utiles. Les charges utiles sont comme précédemment montées sur la structure supportant les Gyroscopes d'Inertie. La plate-forme intermédiaire supportant les gyroscopes d'inertie est liée à la plate-forme spatiale selon une liaison pivot, l'axe de cette liaison est appelé axe de roulis. Le système de gyroscopes d'inertie ne peut alors plus assurer le contrôle d'attitude de la plate-forme spatiale que selon les axes de lacet et de tangage, si ce contrôle est envisagé par l'application. La plate-forme de gyroscopes d'inertie peut actionner directement la rotation de la charge utile selon l'axe de roulis, mais cette rotation ne sera pas très performante selon le rapport de puissances défini précédemment. A cette différenc, près, les mécanismes de rotation sont identiques à ceux décrits dans la configuration de base de l'invention. Il peut être plus intéressant en fonction des missions des différents éléments de positionner les senseurs d'attitude du système sur la plate-forme intermédiaire qui supporte le système de gyroscopes d'inertie. La position relative de la plate-forme intermédiaire de gyroscopes d'inertie et de la plate-forme spatiale doit être mesurée par un senseur relatif, par exemple : des codeurs associés à une base de temps ou des codeurs optiques ou des résolveurs, ou des génératrices tachymétriques ou des accéléromètres ou autres. La liaison pivot entre la plate-forme spatiale et la plate-forme intermédiaire des gyroscopes peut être réalisée avec des roulements ou des paliers magnétiques avec les caractéristiques et avantages et inconvénients précédemment décrits pour les liaisons du mécanisme.

Deux principales configurations du système sont envisagées à cet effet:

- la plate-forme spatiale est stabilisée 3-axes. Il est nécessaire d'ajouter un actionneur du contrôle d'attitude sur l'axe de roulis. Il peut s'agir: d'actionneurs à échange de moment cinétique, d'actionneurs à expulsion de matière, ou d'actionneurs à entraînement électrique montés sur la liaison pivot entre la plate-forme spatiale et la plate-forme intermédiaire supportant les gyroscopes d'inertie. Cette configuration n'a pas un très grand intérêt en pratique, sauf pour des applications très spécifiques,
- la plate-forme spatiale est spinnée. Le contrôle en roulis de la plate-forme orbitale correspond alors uniquement à l'entretien de la vitesse de rotation. Il peut être effectué en utilisant des actionneurs à expulsion de matière (propulsion chimique, propulsion électrique ou plasmique).

Pour les deux configurations décrites ci-dessus le système de contrôle d'attitude de la plate-forme spatiale ne commande le système de gyroscopes d'inertie que selon les axes de lacet et tangage, par rapport à l'axe de roulis défini comme l'axe de rotation de la plate-forme intermédiaire du système de gyroscopes d'inertie par rapport à la plate-forme spatiale. Ce système de contrôle d'attitude gère séparément en boucle fermée la commande de l'actionneur de l'axe de roulis.

Le système décrit peut ne pas effectuer le contrôle d'attitude et d'orbite de la plate-forme spatiale, ou bien la plate-forme spatiale peut simplement assurer le montage du système décrit sur un ensemble ou système spatial plus grand, par exemple une station orbitale. Deux configurations sont envisageables :

Le système de contrôle de la ou des charges utiles commande le système de gyroscopes d'inertie en boucle ouverte. C'est le système le plus simple, mais aussi le moins précis. La charge utile doit être dotée de senseurs d'attitude absolus ou recevoir une attitude absolue d'autres senseurs, de la station orbitale par exemple.

Le système de contrôle d'attitude de la ou des charges utiles reçoit, de même que précédemment, en entrée les manoeuvres effectuées par le système spatial auquel, il est raccordé.

On peut cependant envisager d'assembler le système tel qu'il est présenté dans sa configuration nominale directement sur un système spatial plus grand, par exemple une station spatiale. La consigne d'attitude de la plate-forme spatiale est alors la consigne d'attitude du système spatial plus grand.

Les grands systèmes spatiaux, par exemple les stations orbitales, sont souvent très souples. Ce système permet alors de limiter les efforts transférés, et donc d'augmenter la stabilité de la charge utile.

Il va de soi que la description qui précède n'a été proposée qu'à titre d'exemple non limitatif et que de nombreuses variantes peuvent être proposées par l'homme de l'art sans sortir du cadre de l'invention.

## Revendications

1. Procédé de commande en orientation d'une charge utile embarquée sur une plate-forme d'un véhicule spatial, selon lequel :

    - on relie la charge utile à la plate-forme par l'intermédiaire d'un dispositif de manoeuvre à entraînement électrique, ayant au moins un axe de manoeuvre,
    - on munit une partie de la plate-forme d'un système de gyroscopes d'inertie adapté à générer au moins des couples d'axe parallèle à l'axe de manoeuvre du dispositif de manoeuvre à entraînement électrique,
    - et chaque fois qu'un basculement de la charge utile est nécessaire autour de l'axe de manoeuvre

        • on détermine un signal de manoeuvre propre à faire appliquer à la charge utile par le dispositif de manoeuvre à entraînement électrique, un couple de basculement propre à générer ledit basculement nécessaire,

- on prédit le couple de réaction devant être appliqué à la plate-forme lorsque ce signal de manoeuvre sera appliqué au dispositif de manoeuvre à actionnement électrique,
- on détermine un signal de compensation propre à faire appliquer à la plate-forme, par le système de gyroscopes d'inertie, un couple de compensation opposé à ce couple de réaction prédit, et
- on applique simultanément le couple de manoeuvre au dispositif de manoeuvre à entraînement électrique et le signal de compensation au système de gyroscopes d'inertie.

2. Procédé selon la revendication 1, caractérisé en ce que le dispositif de manoeuvre à entraînement électrique a au moins deux axes de manoeuvre perpendiculaires.

3. Procédé selon la revendication 1 ou 2, caractérisé en ce qu'on dispose la partie de la plate-forme qui est munie du système de gyroscopes d'inertie entre le dispositif de manoeuvre d'entraînement électrique et le reste de la plate-forme.

4. Procédé selon la revendication 3, caractérisé en ce qu'on dispose des moyens d'amortissement entre ladite partie munie du système de gyroscopes d'inertie et le reste de la plate-forme.

5. Procédé selon la revendication 3, caractérisé en ce que ladite partie munie du système de gyroscopes d'inertie est rigidement liée au reste de la plate-forme.

6. Procédé selon la revendication 4 ou la revendication 5, caractérisé en ce qu'on munit le reste de la plate-forme d'un système de contrôle d'attitude et d'orbite muni d'un ensemble d'actionnement en contrôle d'attitude et d'orbite comprenant ce système de gyroscopes d'inertie.

7. Procédé selon l'une quelconque des revendications 1 à 6, caractérisé en ce que ledit reste de la plate-forme est relié à une plate-forme principale par une liaison admettant un axe de rotation.

8. Procédé selon la revendication 7, caractérisé en ce que la plate-forme est stabilisée en autorotation autour d'un axe d'autorotation confondu avec cet axe de rotation de la liaison.

9. Procédé selon l'une quelconque des revendications 1 à 8, caractérisé en ce qu'on munit la charge utile de capteurs d'attitude générant des signaux de mesure d'attitude et on génère le signal de compensation à partir du couple de réaction et de ces signaux de mesure d'attitude.

10. Véhicule spatial comportant :

- une plate-forme spatiale,
- une charge utile mobile embarquée sur cette plate-forme,
- une liaison connectant la charge utile à la plate-forme, cette liaison comportant un dispositif de manoeuvre à entraînement électrique, ayant au moins un axe de manoeuvre,
- un système de gyroscopes d'inertie solidaire d'une partie de la plate-forme, ce système étant adapté à générer au moins des couples d'axe parallèle audit axe de manoeuvre,
- des moyens de commande en basculement pour basculer la charge utile par rapport à la plate-forme comportant :

  - des moyens pour déterminer le signal de manoeuvre propre à faire appliquer à la charge utile par le dispositif de manoeuvre à entraînement électrique, un couple de basculement propre à générer ledit basculement nécessaire,
  - des moyens pour prédire le couple de réaction devant être appliqué à la plate-forme lorsque ce signal de manoeuvre sera appliqué au dispositif de manoeuvre à actionnement électrique,
  - des moyens pour déterminer un signal de compensation propre à faire appliquer à la plate-forme, par le système de gyroscopes d'inertie, un couple de compensation opposé à ce couple de réaction prédit, et
  - des moyens pour appliquer simultanément le couple de manoeuvre au dispositif de manoeuvre à entraînement électrique et le signal de compensation au système de gyroscopes d'inertie.

11. Véhicule selon la revendication 10, caractérisé en ce que le dispositif de manoeuvre à entraînement électrique a au moins deux axes de manoeuvre perpendiculaires.

12. Véhicule selon la revendication 10 ou 11, caractérisé en ce que la partie de la plate-forme qui est munie du système de gyroscopes d'inertie est montée entre le dispositif de manoeuvre d'entraînement électrique et le reste de la plate-forme.

13. Véhicule selon la revendication 12, caractérisé en ce que des moyens d'amortissement sont disposés entre ladite partie munie du système de gyroscopes d'inertie et le reste de la plate-forme.

14. Véhicule selon la revendication 12, caractérisé en ce que ladite partie munie du système de gyroscopes d'inertie est rigidement liée au reste de la plateforme.

15. Véhicule selon la revendication 13 ou la revendication 14, caractérisé en ce que le reste de la plateforme est muni d'un système de contrôle d'attitude et d'orbite muni d'un ensemble d'actionnement en contrôle d'attitude et d'orbite comprenant ce système de gyroscopes d'inertie.

16. Véhicule selon l'une quelconque des revendications 10 à 15, caractérisé en ce que ledit reste de la plate-forme est relié à une plate-forme principale par une liaison admettant un axe de rotation.

17. Véhicule selon la revendication 16, caractérisé en ce que la plate-forme est stabilisée en autorotation autour d'un axe d'autorotation confondu avec cet axe de rotation de la liaison.

18. Véhicule selon l'une quelconque des revendications 10 à 17, caractérisé en ce que la charge utile est munie de capteurs d'attitude générant des signaux de mesure d'attitude et des moyens de détermination du signal de compensation reçoivent un signal représentatif du couple de réaction et ces signaux de mesure d'attitude.

INFORMATIONS D'ATTITUDE DE LA PLATE-FORME

COMMANDE/ CONSIGNE DU VEHICULE SPATIAL (Opt) — 1

CONSIGNE DE LA LIGNE DE VISEE DE LA CHARGE UTILE — 6

CONTROLE DU VEHICULE ET DE LA CHARGE UTILE

SCA.VS — 2

SCA.CU — 7

RESULTANTE DES COUPLES — 11

SGI — 3

SCM — 8

PLATE-FORME DU VEHICULE SPATIAL — 4

CHARGE UTILE — 9

SENSEURS D'ATTITUDE DE LA PLATE-FORME — 5

SENSEURS D'ATTITUDE DE LA CHARGE UTILE — 10

SYSTEME DYNAMIQUE

Ccons(S) — 14

Ccom/S — 15

Ccons(C.Ut) — 21

Ccom(C.Ut) — 22

CRÉEL(C.Ut)

INFORMATIONS D'ATTITUDE ABSOLUE ET/OU RELATIVE DE/OU DES CHARGES UTILES

FIG.1

EP 0 796 786 A1

13

FIG. 2

FIG. 3

FIG. 4

FIG.5

POSITION

ACCELERATION

FIG.11

FIG.6

FIG.7

FIG.8

FIG.9

EP 0 796 786 A1

FIG.10

# EP 0 796 786 A1

Office européen  
des brevets

## RAPPORT DE RECHERCHE EUROPEENNE

Numero de la demande  
EP 97 40 0615

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| X | US 3 263 944 A (WATSON) | 1-3,5-7, 9-12, 14-16,18 | B64G1/28 G05D1/08 |
| A | * colonne 1, ligne 23 - colonne 2, ligne 8 * <br> * colonne 2, ligne 37 - colonne 5, ligne 74; figures 1-5 * | 4,8,13, 17 | |
| X | JOURNAL OF GUIDANCE AND CONTROL, vol. 2, no. 5, Octobre 1979, pages 420-425, XP002013293 WARD, R.: "GALILEO DUAL-SPIN ATTITUDE AND ARTICULATION CONTROL SYSTEM" | 1,10 | |
| A | * page 421, colonne de gauche, ligne 23 - page 425, colonne de gauche, ligne 8; figures 6-10 * | 2-9, 11-18 | |
| A,D | US 4 375 878 A (HARVEY ET AL.) <br> * colonne 2, ligne 30 - colonne 4, ligne 62; figures 1-4 * | 1,10 | |
| A | EP 0 381 574 A (SOCIETE EUROPEENNE DE PROPULSION) <br> * colonne 2, ligne 30 - colonne 9, ligne 30; figures 1-4 * | 1,10 | DOMAINES TECHNIQUES RECHERCHES (Int.Cl.6) <br><br> B64G <br> G05D |
| A | GB 2 182 624 A (RCA CORPORATION) <br> * page 2, ligne 35 - page 3, ligne 128; figures 1-6 * | 1,10 | |
| A | US 5 256 942 A (WOOD) <br> * colonne 4, ligne 62 - colonne 5, ligne 33 * <br> * colonne 6, ligne 58 - colonne 7, ligne 37; figures 1-3,7 * | 1,10 | |
| | -/-- | | |

Le présent rapport a été établi pour toutes les revendications

| Lieu de la recherche | Date d'achèvement de la recherche | Examinateur |
|---|---|---|
| LA HAYE | 10 Juillet 1997 | Rivero, C |

CATEGORIE DES DOCUMENTS CITES

X : particulièrement pertinent à lui seul  
Y : particulièrement pertinent en combinaison avec un autre document de la même catégorie  
A : arrière-plan technologique  
O : divulgation non-écrite  
P : document intercalaire

T : théorie ou principe à la base de l'invention  
E : document de brevet antérieur, mais publié à la date de dépôt ou après cette date  
D : cité dans la demande  
L : cité pour d'autres raisons

& : membre de la même famille, document correspondant

EPO FORM 1503 03.82 (P04C02)

20

EP 0 796 786 A1

Office européen
des brevets

**RAPPORT DE RECHERCHE EUROPEENNE**

Numero de la demande

EP 97 40 0615

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | US 3 281 094 A (JASPERSON)<br>* colonne 3, ligne 14 - colonne 8, ligne 75; figures 1-7 *<br>----- | 1,10 | |
| | | | **DOMAINES TECHNIQUES RECHERCHES (Int.Cl.6)** |

Le présent rapport a été établi pour toutes les revendications

| Lieu de la recherche | Date d'achèvement de la recherche | Examinateur |
|---|---|---|
| LA HAYE | 10 Juillet 1997 | Rivero, C |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

21